# EUROPEAN PATENT SPECIFICATION

(11) **EP 1 877 737 B1**
(45) Date of publication and mention of the grant of the patent: **19.11.2008**
(21) Application number: 06726875.5
(22) Date of filing: 24.04.2006
(51) Int. Cl.: G01F 1/32, G01F 1/58

(54) **Flow meter using a fluidic oscillator**
Durchflussmesser mit einem fluidischen oszillator
Débitmètre à oscillateur fluidique

(30) Priority: 26.04.2005 GB 0508342
(43) Date of publication of application: 16.01.2008
(60) Divisional application: 08016168.0
(73) Proprietor: Severn Trent Metering Services Limited, Chesterfield, Derbyshire S41 9PZ (GB)
(72) Inventor: COTTAM, David, Matlock Bath DE4 3PB (GB); FAIRMAN, Mark Andrew, Sheffield S8 8HF (GB)
(74) Representative: Makovski, Priscilla Mary
(86) International application number: PCT/GB2006/001486
(87) International publication number: WO 2006/114592

(56) References cited:
- EP-A2- 0 381 344
- WO-A-00/73743
- WO-A-97/22854
- PATENT ABSTRACTS OF JAPAN vol. 2000, no. 12, 3 January 2001 (2001-01-03) & JP 2000 241211 A (MATSUSHITA ELECTRIC IND CO LTD), 8 September 2000 (2000-09-08)

## Description

This invention relates to a fluid flow meter and in particular to a meter for measuring the flow of liquids and operating on the fluidic oscillator principle.

It is well known that the frequency of oscillation of a fluidic oscillator is dependent (though not necessarily linearly) on the rate of flow through it. This principle has been used for the measurement of the flow of liquids and in particular in water meters to measure the water consumption of a property, for example. However, in practice, it can be particularly difficult to obtain accurate measurements (i.e. within one or two percent) in situations where the flow rate can vary over a wide range, and where the pressure of the fluid may vary substantially. Accuracy of measurement needs to be maintained over a turn-down ratio of as much as 200 to 1 and where the flow velocity may also change over a corresponding range of 200 to 1. Further, the pressure fluctuations may vary by a factor as much as 40,000 to 1.

Fluidic oscillators that are used for measuring water consumption typically comprise a body containing an inlet jet leading into a pair of channels separated by a splitter. Downstream of the splitter the main channel includes two feedback loops that lead back to opposite sides of the path of the fluid adjacent the inlet jet. As is known, the high velocity component of the fluid will "attach" itself to the wall of one of the channels by the Coanda effect, but then as a result of the action of the fluid that is fed back, it will switch across to the other wall. The switching or oscillating is dependent upon the rate of flow.

These oscillations can be detected electromagnetically by applying a magnetic field across the flow and detecting the resulting e.m.f. generated in the liquid itself across a pair of electrodes. The electrodes are mounted flush with the appropriate channel wall so as not to disturb the flow, nor add to the substantial velocity and pressure changes encountered in water metering. Thus, this arrangement can be used in the metering of domestic water supplies as it can be constructed to measure with sufficient accuracy for metering purposes.

Further, water may be caused to move inside the oscillator by other external effects such as mechanical vibration or water pressure pulsation although there is no net flow of water. Under such circumstances it is possible to detect signals at the sensing electrodes that could be confused with signals caused by genuine fluid flow. These signals could be generated by either electromagnetic induction or electrochemical reactions at the surface of the electrodes.

WO 97/22854 discloses a fluidic oscillator meter JP 2000-241211 discloses a linear flow meter that generates a von Karman vortex. EP 0 381 344 also discloses a fluidic oscillator meter.

According to the invention we provide a fluidic oscillator liquid flow meter comprising a body having an inlet portion to receive a flow of liquid to be measured, an outlet portion, a main channel defining a flow path between the inlet and outlet, the flow path including feedback means to induce oscillations in the flowing fluid, the oscillations being detected by detector means, the detector means comprising magnetic field generating means to apply a magnetic field across the flow path and at least one pair of sensing electrodes to detect the resulting e.m.f., the electrodes being positioned such that they protrude from the body into the flow path.

This arrangement of the electrodes is particularly advantageous as the sensitivity of the detector means is improved without adversely affecting the calibration and stability of the oscillator as a fluid measuring device. Thus, the positioning of the electrodes such that instead of being flush with the body, they protrude into the flow does not disturb the flow to the extent that accurate measurement is no longer possible and in fact allows particularly accurate metering. Further, it has been found that the electrode arrangement of the invention minimises false readings caused by mechanical vibration or water pressure pulsation.

Preferably, at least one of the pair of sensing electrodes protrudes from the body into the flow a distance between 0.5mm and 10mm. This range of protrusion improves the accuracy of the meter while not creating a significant blockage in the flow path, which would result in a pressure drop that may disturb the oscillations and therefore the accuracy.

The electrodes may be placed in the main channel. Alternatively, the electrodes may be placed in at least one feedback channel.

The oscillator may include a splitter in the main channel to promote oscillation of the flow. Preferably, the feedback means comprises two feedback channels that split from the main channel and lead back to rejoin the main channel upstream adjacent the inlet portion.

Preferably, there are two pairs of sensing electrodes, each pair being located in each feedback channel. Alternatively, one pair may be located in the feedback channel and another pair located in the main channel.

The magnetic field generating means may comprise at least one permanent magnet. Preferably the at least one magnet is embedded in walls of the body of the meter and is electrically insulated from the fluid flow. The magnet may be made of an electrically non-conducting material such as plastics-bonded ferrite and therefore may form part of the wall of the body.

The sensing electrodes are used to detect induced signals within the fluid flow. The signals detected by the electrodes are typically processed by signal processing means which may include several stages of signal amplification. The signal processing means should ideally be able to filter out noise in the signal and also cancel common-mode signals. It has been found that the more accurate readings can be obtained by applying a driving signal to the electrodes. Further, it has been found that the form of the signal is particularly important.

There now follows by way of example only, a detailed description of the present invention with reference to the accompanying drawings in which;
**Figure 1** shows a part sectional view of a fluidic oscillating water meter according to the invention;
**Figure 2** shows side sectional view of the meter shown in Figure 1;
**Figure 3** shows a first embodiment of an electrode driving circuit for use in the flow meter;
**Figure 4** shows a second embodiment of an electrode driving circuit for use in the flow meter;
**Figure 5** is a graph showing the form of the alternating driving signal that is applied to the driving circuit electronics; and
**Figure 6** is a graph showing the form of the alternating driving signal that is applied to the electrodes through the driving circuit electronics.

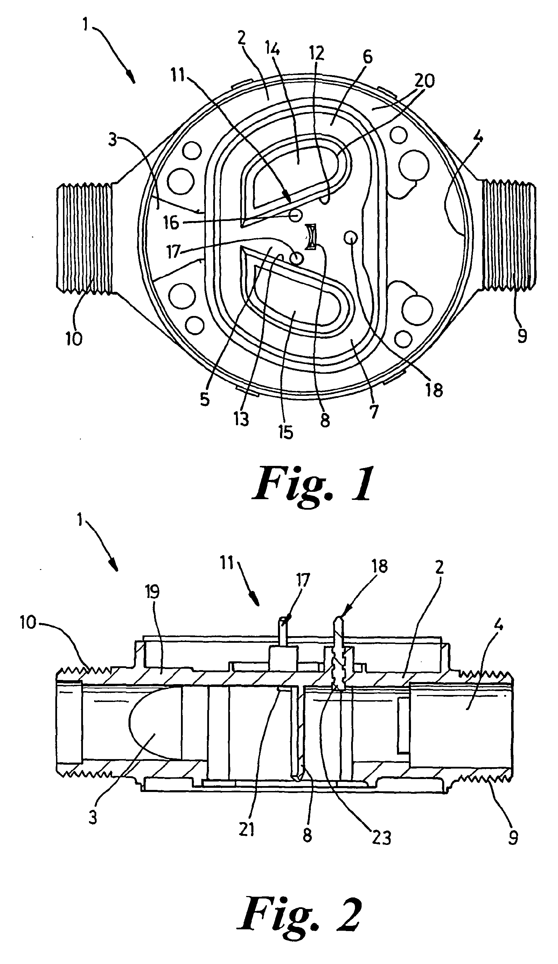

A fluidic oscillator 1 is shown in Figure 1 and is generally of known kind and is for use as a domestic water meter. The oscillator meter 1 comprises a body 2, which includes walls 20 that define a plurality of flow paths. The body 2 defines an inlet portion 3, an outlet portion 4 and a main channel 5 therebetween. The body 2 also defines feedback means, which comprises two looped feedback channels 6, 7, that split from the main channel 5 and then lead back to rejoin the main channel 5 adjacent the inlet portion 2. The splitter 8 is located centrally in the main channel 5, between the splitting and rejoin points of the feedback channels 6, 7.

The inlet portion 3 comprises a narrowed aperture that receives flow from an inlet tube (not shown) that is connected to the inlet portion 3 by a screw thread 10. Similarly, the outlet portion 4 is adapted to receive an outlet tube (not shown) that is connected thereto by a screw thread 9.

Fluid received through the inlet portion 3 flows through the flow path of the main channel 5 and will, by virtue of the Coanda effect, "attach" itself to the one of surfaces 12 or 13. The splitter 8 encourages the flow to be predominately adjacent one surface 12, 13 or the other. If the flow is "attached" to surface 12, it will predominately flow around feedback channel 6. This fed-back fluid will disturb the part of the flow adjacent the inlet 3 and will encourage the flow to "attach" itself to the other surface 13. Thus, the flow from inlet portion 3 to outlet portion 4 will oscillate between being "attached" to surface 12, and flowing predominately through feedback channel 6, to being "attached" to surface 13, and flowing predominately through feedback channel 7.

These oscillations are dependent on the quantity of flow through the meter 1.

The fluidic oscillator meter 1 includes detector means 11. The detector means 11 comprises magnetic field generating means in the form of permanent magnets 14, 15 mounted in the walls 20 of the flow paths defined by the body 2. The magnets 14, 15 apply a magnetic field across the flow in the main channel 5. The detector means 11 also includes electrodes 16, 17, 18 to detect the resulting e.m.f. generated in the oscillating flow. This signal is used in the metering of the fluid flow through the meter 1.

The electrodes 16, 17, 18 comprise metal cylindrical members that extend through a top wall 19 of the body 2. The distal ends 21, 22, 23 of the electrodes 16, 17, 18 protrude through the body 2 into the flow path of the main channel 5. The detector means 11 is capable of accurate measurement of the flow through the meter 1 as the electrodes protrude into the flow path. The electrodes 16, 17, 18 protrude past the wall 19 of the body 2 a distance of approximately 1mm. It will be appreciated that the magnets 14, 15 and electrodes 16, 17, 18 can be located elsewhere in the flow paths defined by the body 2. For instance, the magnets 14, 15 may be positioned within opposed walls 20 of the feedback loop 6 or 7, with the electrodes appropriately positioned and protruding into the feed back flow path. Further the electrodes could alternatively protrude a distance of approximately 2, 3, 4, 5, 6, 7, 8 or 9mm.

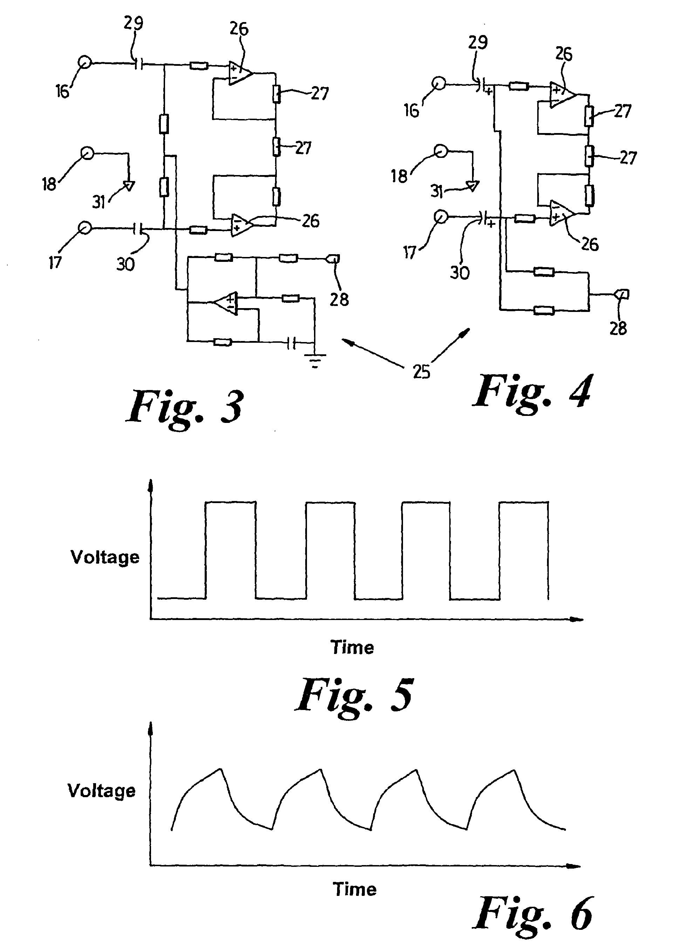

The electrodes comprise two sensing electrodes 16, 17 and one earth electrode 18. The electrodes 16, 17, 18 are connected to a driving signal means comprising an electrode bias circuit 25. The electrode bias circuits 25 are shown as Figure 3 and Figure 4. The electrode bias circuits 25 both include a plurality of operational amplifiers 26 and resistors 27 arranged to apply a driving signal, that is input at 28, to the sensing electrodes 16, 17. The driving signal is applied to the sensing electrodes 16, 17 through capacitors 29, 30 (the capacitors of Figure 4 being of polarized type). The earth electrode 18 is connected to ground 31.

The form of the driving signal applied to the electrode bias circuits 25 is shown in Figure 5 and is a square wave. It is advantageous to apply a driving signal to the electrodes 16, 17 to achieve accurate and reliable metering of the fluid flow. The form of the signal that is applied to the electrodes through capacitors 29, 30 is shown in Figure 6. As can be seen, the square wave is rounded due to the time constant of the capacitors 29, 30. As will be appreciated, the graphs showing the driving signal (Figure 5) and applied driving signal (Figure 6) are only intended to show the form of the signal and do not give a relative comparison of the two signals.

However, the frequency of the applied driving signal is typically 0.5 KHz and the RMS voltage of the signal is typically 2 Volts.

## Claims

1. A fluidic oscillator liquid flow meter comprising a body (2) having an inlet portion (3) to receive a flow of liquid to be measured, an outlet portion (4), a main channel (5) defining a flow path between the inlet and outlet, the flow path including feedback means (6,7) to induce oscillations in the flowing fluid, the oscillations being detected by detector means (11), the detector means (11) comprising magnetic field generating means (14,15) to apply a magnetic field across the flow path and at least one pair of sensing electrodes (16,17,18) to detect the resulting e.m.f, **characterised in that** the electrodes (16,17,18) are positioned such that they protrude from the body (2) into the flow path.

2. A fluidic oscillator liquid flow meter according to claim 1, in which at least one of the pair of sensing electrodes (16,17,18) protrudes from the body (2) into the flow a distance between 0.5mm and 10mm.

3. A fluidic oscillator liquid flow meter according to claim 1 or claim 2, in which the electrodes (16,17,18) are placed in the main channel (5).

4. A fluidic oscillator liquid flow meter according to claim 1 or claim 2, in which the electrodes (16,17,18) are placed in at least one feedback channel (6,7).

5. A fluidic oscillator liquid flow meter according to any preceding claim, in which the oscillator (1) includes a splitter (8) in the main channel (5) to promote oscillation of the flow.

6. A fluidic oscillator liquid flow meter according to any preceding claim, in which the feedback means comprises two feedback channels (6,7) that split from the main channel (5) and lead back to rejoin the main channel (5) upstream adjacent the inlet portion (3).

7. A fluidic oscillator liquid flow meter according to any preceding claim, in which there are two pairs of sensing electrodes (16,17,18).

8. A fluidic oscillator liquid flow meter according to claim 7, in which one of the two pairs of sensing electrodes (16,17,18) is located in each feedback channel (6,7).

9. A fluidic oscillator liquid flow meter according to claim 7, in which one pair of sensing electrodes (16,17,18) is located in the feedback channel (6,7) and another pair is located in the main channel (5).

10. A fluidic oscillator liquid flow meter according to any preceding claim, in which the magnetic field generating means comprises at least one permanent magnet (14,15).

11. A fluidic oscillator liquid flow meter according to claim 10, in which the at least one magnet (14,15) is embedded in walls of the body (2) of the meter (1) and is electrically insulated from the fluid flow.

12. A fluidic oscillator liquid flow meter according to claim 10, in which the magnet (14,15) is made of an electrically non-conducting material such as plastics-bonded ferrite.

13. A fluidic oscillator liquid flow meter according to claim 12, in which magnet (14,15) forms part of the wall of the body (2).

## Patentansprüche

1. Strömungstechnisches Oszillator-Flüssigkeitsflussmessgerät umfassend einen Körper (2) mit einem Einlassabschnitt (3) zum Empfangen eines zu messenden Flüssigkeitsflusses, einen Auslassabschnitt (4), einen Hauptkanal (5), der einen Flusspfad zwischen dem Einlass und dem Auslass definiert, wobei der Flusspfad eine Rückkopplungseinrichtung (6, 7) umfasst, um Oszillationen in der fließenden Flüssigkeit herbeizuführen, wobei die Oszillationen durch eine Detektionseinrichtung (11) detektiert werden, wobei die Detektionseinrichtung (11) eine magnetfelderzeugende Einrichtung (14, 15) umfasst, um ein Magnetfeld über dem Flusspfad zu applizieren, und zumindest ein Paar Fühlelektroden (16, 17, 18), um das resultierende EMF zu detektieren,
**dadurch gekennzeichnet,**
**dass** die Elektroden (16, 17, 18) derart positioniert sind, dass sie von dem Körper (2) in den Flusspfad hervorstehen.

2. Strömungstechnisches Oszillator-Flüssigkeitsflussmessgerät nach Anspruch 1, bei dem zumindest eine des Paares an Fühlelektroden (16, 17, 18) von dem Körper (2) um eine Distanz zwischen 0,5 mm und 10 mm in den Fluss hervorsteht.

3. Strömungstechnisches Oszillator-Flüssigkeitsflussmessgerät nach Anspruch 1 oder Anspruch 2, bei dem die Elektroden (16, 17, 18) in dem Hauptkanal (5) angeordnet sind.

4. Strömungstechnisches Oszillator-Flüssigkeitsflussmessgerät nach Anspruch 1 oder Anspruch 2, bei dem die Elektroden (16, 17, 18) in zumindest einem Rückkopplungskanal (6, 7) angeordnet sind.

5. Strömungstechnisches Oszillator-Flüssigkeitsflussmessgerät nach einem der vorhergehenden Ansprüche, bei dem der Oszillator (1) einen Spalter (8) in dem Hauptkanal (5) umfasst, um Oszillationen des Flusses zu begünstigen.

6. Strömungstechnisches Oszillator-Flüssigkeitsflussmessgerät nach einem der vorhergehenden Ansprüche, bei dem die Rückkopplungseinrichtung zwei Rückkopplungskanäle (6, 7) umfasst, die sich von dem Hauptkanal (5) abspalten und zurückführen, um sich dem Hauptkanal (5) stromaufwärts angrenzend an den Einlassabschnitt (3) wieder anzuschließen.

7. Strömungstechnisches Oszillator-Flüssigkeitsflussmessgerät nach einem der vorhergehenden Ansprüche, bei dem es zwei Paare an Fühlelektroden (16, 17, 18) gibt.

8. Strömungstechnisches Oszillator-Flüssigkeitsflussmessgerät nach Anspruch 7, bei dem sich in jedem Rückkopplungskanal (6, 7) eines der beiden Paare an Fühlelektroden (16, 17, 18) befindet.

9. Strömungstechnisches Oszillator-Flüssigkeitsflussmessgerät nach Anspruch 7, bei dem sich ein Paar an Fühlelektroden (16, 17, 18) in dem Rückkopplungskanal (6, 7) befindet und ein anderes Paar sich in dem Hauptkanal (5) befindet.

10. Strömungstechnisches Oszillator-Flüssigkeitsflussmessgerät nach einem der vorhergehenden Ansprüche, bei dem die magnetfelderzeugende Einrichtung zumindest einen Permanentmagnet (14, 15) umfasst.

11. Strömungstechnisches Oszillator-Flüssigkeitsflussmessgerät nach Anspruch 10, bei dem der zumindest eine Magnet (14,15) in Wände des Körpers (2) des Messgeräts (1) eingebettet ist und elektrisch gegenüber dem Flüssigkeitsfluss isoliert ist.

12. Strömungstechnisches Oszillator-Flüssigkeitsflussmessgerät nach Anspruch 10, bei dem der Magnet (14, 15) aus einem elektrisch nichtleitenden Material, wie kunststoffgebundenem Ferrit, gefertigt ist.

13. Strömungstechnisches Oszillator-Flüssigkeitsflussmessgerät nach Anspruch 12, bei dem der Magnet (14, 15) einen Abschnitt der Wand des Körpers (2) bildet.

## Revendications

1. Débitmètre à oscillateur fluidique comprenant un corps (2) comportant une partie entrée (3) pour recevoir un écoulement de liquide à mesurer, une partie sortie (4), un canal principal (5) définissant un chemin d'écoulement entre l'entrée et la sortie, le chemin d'écoulement comprenant un moyen de rétroaction (6, 7) pour induire des oscillations dans le fluide en mouvement, les oscillations étant détectées par un moyen formant détecteur (11), le moyen formant détecteur (11) comprenant un moyen générant un champ magnétique (14, 15) pour appliquer un champ magnétique à travers le chemin d'écoulement et au moins une paire d'électrodes de mesure (16, 17, 18) pour détecter la f.é.m. résultante, **caractérisé en ce que** les électrodes (16, 17, 18) sont positionnées de telle manière qu'elles font saillie depuis le corps (2) dans le chemin d'écoulement.

2. Débitmètre à oscillateur fluidique selon la revendication 1, dans lequel au moins l'une des électrodes de la paire d'électrodes de mesure (16, 17, 18) fait saillie depuis le corps (2) dans l'écoulement sur une distance comprise entre 0,5 mm et 10 mm.

3. Débitmètre à oscillateur fluidique selon la revendication 1 ou 2, dans lequel les électrodes (16, 17, 18) sont placées dans le canal principal (5).

4. Débitmètre à oscillateur fluidique selon la revendication 1 ou 2, dans lequel les électrodes (16, 17, 18) sont placées dans au moins un canal de rétroaction (6, 7).

5. Débitmètre à oscillateur fluidique selon l'une quelconque des revendications précédentes, dans lequel l'oscillateur (1) comprend un diviseur (8) dans le canal principal (5) pour favoriser l'oscillation de l'écoulement.

6. Débitmètre à oscillateur fluidique selon l'une quelconque des revendications précédentes, dans lequel le moyen de rétroaction comprend deux canaux de rétroaction (6, 7) qui se séparent du canal principal (5) et rejoignent le canal principal (5) en amont, au voisinage de la partie entrée (3).

7. Débitmètre à oscillateur fluidique selon l'une quelconque des revendications précédentes, dans lequel il y a deux paires d'électrodes de mesure (16, 17, 18).

8. Débitmètre à oscillateur fluidique selon la revendication 7, dans lequel l'une des deux paires d'électrodes de mesure (16, 17, 18) est située dans chaque canal de rétroaction (6, 7).

9. Débitmètre à oscillateur fluidique selon la revendication 7, dans lequel une paire d'électrodes de mesure (16, 17, 18) est située dans le canal de rétroaction (6, 7) et une autre paire est située dans le canal principal (5).

10. Débitmètre à oscillateur fluidique selon l'une quelconque des revendications précédentes, dans lequel le moyen générant un champ magnétique comprend au moins un aimant permanent (14, 15).

11. Débitmètre à oscillateur fluidique selon la revendication 10, dans lequel ledit au moins un aimant (14, 15) est noyé dans des parois du corps (2) du débitmètre (1) et est électriquement isolé de l'écoulement de fluide.

12. Débitmètre à oscillateur fluidique selon la revendication 10, dans lequel l'aimant (14, 15) est fait d'un matériau électriquement non conducteur, comme une ferrite liée par matière plastique.

13. Débitmètre à oscillateur fluidique selon la revendication 12, dans lequel l'aimant (14, 15) fait partie de la paroi du corps (2).
